# EUROPÄISCHE PATENTSCHRIFT

(11) **EP 3 421 229 B1**
(45) Veröffentlichungstag und Bekanntmachung des Hinweises auf die Patenterteilung: **06.03.2024**
(21) Anmeldenummer: 18179759.8
(22) Anmeldetag: 26.06.2018
(51) Int. Cl.: B29D 99/00, B29C 70/54, B29C 70/44, B29C 70/34, B29L 31/08

(54) **VERFAHREN ZUM POSITIONIEREN VON FASERBAUTEILEN**
METHOD FOR POSITIONING FIBROUS CONSTRUCTION COMPONENTS
PROCÉDÉ DE POSITIONNEMENT DE COMPOSANTS FIBREUX

(30) Priorität: 27.06.2017 DE 102017006036
(43) Veröffentlichungstag der Anmeldung: 02.01.2019
(73) Patentinhaber: Siemens Gamesa Renewable Energy Service GmbH, 20097 Hamburg (DE)
(72) Erfinder: VOGT, Steffen, 28717 Bremen (DE)
(74) Vertreter: Schlotter, Alexander Carolus Paul

(56) Entgegenhaltungen:
- EP-A2- 0 037 987
- DE-U1-202016 100 796
- FR-A1- 2 985 939
- FR-A1- 2 999 970

## Beschreibung

Die Erfindung betrifft ein Verfahren zur Herstellung eines Faserbauteils mittels einer Faserbauteilform und ein Verfahren zum Herstellen eines Rotorblatts einer Windenergieanlage, wobei in einer Rotorblattteilform umfassend eine Formwand ein vorgefertigtes Faserbauteil angeordnet wird.

Die Erfindung betrifft außerdem ein Faserbauteil, ein Rotorblatt und eine Windenergieanlage.

Bei der Herstellung von Rotorblättern für Windenergieanlagen wird für gewöhnlich ein Verfahren eingesetzt, bei dem eine Form mit Fasermaterial ausgelegt wird. Anschließend wird das Fasermaterial unter Vakuum mit einem Matrixmaterial, für gewöhnlich einem Harz, getränkt. Hierbei handelt es sich üblicherweise um ein Vakuuminfusionsverfahren. Nach dem Aushärten des Matrixmaterials entsteht ein festes Faserbauteil oder schon ein Teil eines Rotorblatts.

Auf diese Weise werden zunächst zwei Rotorblatthalbschalen hergestellt, die anschließend zu einem Rotorblatt zusammengesetzt werden.

Dabei hat es sich als vorteilhaft erwiesen, bei der Herstellung der Rotorblatthalbschalen in bestimmten Bereichen vorgefertigte Faserbauteile, sogenannte Prefabs oder Prepregs, auszulegen. Die Prepregs werden separat gefertigt und bereits mit Matrixmaterial getränkt, jedoch noch nicht vollständig ausgehärtet. Solche Prepregs werden beispielsweise für die Rotorblattgurte und die Hinterkantengurte verwendet. Prefabs sind vorgefertigte Faserbauteile, die allerdings noch nicht mit Matrixmaterial getränkt sind.

Die Hinterkantengurte sind im Bereich der Rotorblatthinterkante in der Rotorblattschale integriert und sind notwendig, um ein vorgegebenes Dehnungsniveau des Rotorblatts einzuhalten. Dieses resultiert aus den bei der Verwendung des Rotorblatts auftretenden wechselnden Eigengewichtsmomenten und aus dem Drehmo-Drehmoment resultierenden Schwenklasten.

Eine Vorrichtung zur Herstellung von dreidimensionalen Vorformlingen im Zuge der Herstellung von faserverstärkten Formteilen ist aus der DE 20 2016 100 796 U1 bekannt.

Ein Herstellungsverfahren eines Vorformlings aus Fasermaterial ist aus der FR 2 999 970 A1 bekannt. Hierbei werden mehrere Lagen eines Fasermaterials auf einer Matrize platziert, um anschließend von einem Stempel in die Matrize geprägt und in einem Heizschritt zu einem Formteil gefügt zu werden.

Ein Verfahren, bei dem zur Herstellung eines Rotorblatts ein vorgefertigter Hinterkantengurt verwendet wird, ist in DE 10 2010 055 874 B3 offenbart. Dabei wird der vorgefertigte Hinterkantengurt zwischen den Halbschalen positioniert und anschließend werden die beiden Halbschalen miteinander verklebt.

Um ein Rotorblatt mit hoher Qualität zu erhalten, muss der Hinterkantengurt möglichst genau an einer zuvor spezifizierten Position fixiert werden.

Um den vorgefertigten Hinterkantengurt in der spezifizierten Position in der Rotorblattteilform, also der Form für eine Halbschale, zu halten, setzt man für gewöhnlich ein Verfahren ein, bei dem der Hinterkantengurt mittels einer Anzahl Zwingen an der Rotorblattteilform fixiert wird. Dies ist notwendig, da ein Verrutschen des vorgefertigten Hinterkantengurts während der Herstellung dazu führt, dass das Rotorblatt fehlerhaft gefertigt wird.

Das Verfahren, den Hinterkantengurt mittels Zwingen zu fixieren, weist jedoch eine Anzahl Nachteile auf. Zunächst ist die Positionierung des Hinterkantengurts durch diese Art der Fixierung nicht genau vorgegeben, so dass der Hinterkantengurt unter Umständen nicht an der zuvor spezifizierten Position anliegt. Weiterhin müssen bei verschiedenen Arbeitsschritten zur Herstellung des Rotorblatts die Zwingen gelöst und erneut fixiert werden, was die Gefahr eines Verrutschens oder einer ungenauen Positionierung des Hinterkantengurts birgt. Schließlich stehen die montierten Zwingen von der Form ab, wodurch sie sich im Arbeitsbereich der mit der Herstellung des Rotorblatts beschäftigten Arbeiter befinden und diese bei der Arbeit behindern.

Es ist die Aufgabe der Erfindung, ein Verfahren und ein Faserbauteil anzugeben, mittels derer eine einfache, genaue und zuverlässige Positionierung von vorgefertigten Faserbauteilen erreicht wird.

Diese Aufgabe wird gelöst durch ein Verfahren zur Herstellung eines Faserbauteils mittels einer Faserbauteilform, wobei das Faserbauteil aus mehreren Fasermateriallagen gefertigt wird, wobei das Verfahren dadurch fortgebildet ist, dass wenigstens ein Einlageelement in Stapelrichtung zwischen den Fasermateriallagen angeordnet wird, wobei das Einlageelement einen über die Fasermateriallagen überstehenden Teil umfasst und der überstehende Teil des Einlageelements eine Fixierlasche bildet, wobei die Faserbauteilform ein Positionsvorgabeelement umfasst, mit der die Fixierlasche in Bezug auf das Faserbauteil ortsfest positioniert wird, wobei zur ortsfesten Positionierung der Fixierlasche ein Fixierelement der Fixierlasche auf dem Positionsvorgabeelement positioniert wird.

Durch dieses Verfahren werden Faserbauteile hergestellt, die wenigstens ein Einlageelement umfassen, das eine Fixierlasche mit einem Fixierelement aufweist. Die Position des Fixierelements in Bezug auf das Faserbauteil ist durch die Verwendung des Positionsvorgabeelements eindeutig festgelegt.

Dieses Faserbauteil wird insbesondere als vorgefertigtes Faserbauteil verwendet, das anschließend in einer Rotorblattteilform ausgelegt wird. Das Fixierelement wird verwendet, um das Faserbauteil an einer zuvor spezifizierten Position in der Rotorblattteilform zu fixieren.

Insbesondere ist das Einlageelement in Stapelrichtung zwischen zwei Fasermateriallagen angeordnet.

Es werden erfindungsgemäß mehrere Einlageelemente im Faserbauteil angeordnet, wobei die Einlageelemente in Stapelrichtung der Fasermateriallagen übereinander angeordnet werden, wobei die überstehenden Teile der übereinander angeordneten Einlageelemente zu einer einzelnen Fixierlasche zusammengefügt, insbesondere miteinander verklebt, werden und wobei insbesondere zwischen den Einlageelementen wenigstens eine Fasermateriallage angeordnet wird.

Durch die Verwendung mehrerer übereinander angeordneter Einlageelemente, die zusammen eine Fixierlasche bilden, wird insbesondere die Zugfestigkeit der Fixierlasche erhöht.

Es werden erfindungsgemäß mehrere Einlageelemente im Faserbauteil angeordnet, wobei die Einlageelemente in Längsrichtung des Faserbauteils nebeneinander angeordnet werden, wobei jedes nebeneinander angeordnete Einlageelement eine Fixierlasche umfasst, wobei insbesondere für jede Fixierlasche ein Positionsvorgabeelement vorgesehen ist.

Durch die Verwendung von mehreren Fixierlaschen, die in Längsrichtung des Faserbauteils nebeneinander angeordnet sind, wird eine genauere Positionierung des vorgefertigten Faserbauteils in der Rotorblattteilform erreicht. Insbesondere wird vermieden, dass Teile des Faserbauteils sich verschieben. Zudem wird die Zugkraft reduziert, die auf eine einzelne Fixierlasche wirkt.

Insbesondere ist das Faserbauteil ein Hinterkantengurt. Bei einem vorgefertigten Hinterkantengurt ist es insbesondere wichtig, dass dieser präzise und zuverlässig in der Rotorblattteilform positionierbar ist, da bei einer fehlerhaften Positionierung das Rotorblatt häufig nicht verwendet werden kann. Das Verfahren kann jedoch auch für andere vorgefertigte Faserbauteile angewendet werden.

Die Aufgabe wird außerdem gelöst durch ein Verfahren zum Herstellen eines Rotorblatts einer Windenergieanlage gemäß Anspruch 5.

Vorteilhaft ist es durch das erfindungsgemäße Verfahren möglich, das vorgefertigte Faserbauteil einfach und sicher an der Form zu fixieren.

Durch die Verwendung von Fixierlaschen mit Fixierelementen entfällt die Notwendigkeit einer Benutzung von Klemmen, so dass ein größerer Arbeitsbereich bei der Herstellung der Rotorblätter zur Verfügung steht.

Zudem ergibt sich der Vorteil, dass durch die Fixierstellen und die Fixierelemente bereits die Positionierung des Faserbauteils vorgegeben wird. Ein umständliches Positionieren des Faserbauteils, damit dieses an der spezifizierten Position fixiert werden kann, entfällt. Zudem wird auch ein Verrutschen des Faserbauteils verhindert.

Vorzugsweise wird das Faserbauteil in dem Rotorblatt endgültig fixiert, indem das Faserbauteil und in der Rotorblattform ausgelegte Fasermateriallagen durch Infusion, insbesondere Vakuuminfusion, mit einem Matrixmaterial miteinander verbunden werden, wobei nach der endgültigen Fixierung des Faserbauteils die Fixierlaschen abgetrennt werden.

Nach der endgültigen Fixierung des Faserbauteils werden die Fixierlaschen nicht länger benötigt, so dass diese abgetrennt werden können. Das ist insbesondere vorteilhaft, da dadurch vermieden wird, dass bei weiteren Herstellungsschritten zur Herstellung des Rotorblatts die Arbeit nicht durch die Fixierlaschen behindert wird. Zudem wird Gewicht und Platz gespart.

In einer vorteilhaften Weiterbildung ist das Fixierelement eine Aussparung, wobei die Fixierlaschen an den Fixierstellen mittels Fixierbolzen, die insbesondere durch die Aussparungen gesteckt werden, ortsfest fixiert werden.

Vorzugsweise ist die Aussparung passgenau zum Fixierbolzen ausgebildet. Der Fixierbolzen weist dabei vorzugsweise die Form eines Zylinders auf, während die Aussparung vorzugsweise kreisförmig ist.

Durch die Verwendung einer Aussparung und eines Fixierbolzens ist eine besonders einfache Fixierung des Faserbauteils an der Formwand möglich. So kann beispielsweise das Faserbauteil mittels der Fixierlaschen an den Fixierbolzen aufgehängt werden, was ein schnelles Positionieren und Entfernen des Faserbauteils in der Rotorblattteilform erlaubt. Alternativ sind die Fixierbolzen beispielsweise Schrauben, mit denen die Fixierlaschen an der Formwand festgeschraubt werden.

Anstelle von Aussparungen in den Fixierlaschen und Fixierbolzen, die durch diese Aussparungen gesteckt werden, können die Fixierlaschen auch auf andere Art fixiert werden. Beispielsweise kann stattdessen die Formwand Aussparungen aufweisen, in die die Fixierelemente der Fixierlaschen greifen. Dies kann beispielsweise durch eine Krümmung der Enden der Fixierlaschen erreicht werden, wobei die gekrümmten Enden der Fixierlaschen, die nun die Fixierelemente bilden, bereits bei der Fertigung des Prepregs oder Prefabs lokal erhitzt werden, so dass sie bei der Fixierung des Faserbauteils formstabil bleiben.

Die Aufgabe wird außerdem gelöst durch ein Faserbauteil für ein Rotorblatt einer Windenergieanlage, wobei das Faserbauteil aus mehreren Fasermateriallagen gefertigt wird, wobei das Faserbauteil dadurch weitergebildet ist, dass das Faserbauteil wenigstens ein Einlageelement umfasst, wobei das Einlageelement einen über die Fasermateriallagen überstehenden Teil umfasst und der überstehende Teil des Einlageelements eine Fixierlasche mit einem Fixierelement bildet.

Vorteilhaft ist das Fixierelement eine Aussparung. Das Faserbauteil umfasst erfindungsgemäß mehrere Einlageelemente, wobei die Einlageelemente in Stapelrichtung der Fasermateriallagen übereinander angeordnet sind, wobei die überstehenden Teile der übereinander angeordneten Einlageelemente zu einer einzelnen Fixierlasche zusammengefügt, insbesondere miteinander verklebt, werden und wobei insbesondere zwischen den Einlageelementen wenigstens eine Fasermateriallage angeordnet ist.

Das Faserbauteil umfasst außerdem erfindungsgemäß mehrere Einlageelemente, wobei die Einlageelemente in Längsrichtung des Faserbauteils nebeneinander angeordnet sind, wobei jedes nebeneinander angeordnete Einlageelement eine Fixierlasche umfasst.

Schließlich ist das Faserbauteil vorteilhafterweise ein Glasfasergelege oder beinhaltet ein Glasfasergelege. Insbesondere vorzugsweise ist das Faserbauteil ein Hinterkantengurt.

Auf das erfindungsgemäße Faserbauteil treffen dabei die gleichen Vorteile zu, die bereits für die erfindungsgemäßen Verfahren erläutert wurden.

Die Aufgabe wird außerdem gelöst durch ein Rotorblatt einer Windenergieanlage, umfassend wenigstens ein Faserbauteil gemäß einem oder mehreren der zuvor genannten Aspekte, wobei insbesondere die Fixierlaschen der Einlageelemente des Faserbauteils abgetrennt wurden.

Schließlich wird die Aufgabe gelöst durch eine Windenergieanlage, umfassend wenigstens ein Rotorblatt mit wenigstens einem Faserbauteil nach einem oder mehreren der zuvor genannten Aspekte.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Schnittansicht eines vorgefertigten Faserbauteils mit einem Einlageelement in einer Hauptform,
- Fig. 2: eine schematische Darstellung in einer Schnittansicht eines vorgefertigten Faserbauteils mit mehreren Einlageelementen in einer Hauptform
- Fig. 3: eine schematische Querschnittsansicht eines Faserbauteils in einer Faserbauteilform,
- Fig. 4: eine schematische Darstellung der Fixierung eines Hinterkantengurts an der Formwand einer Rotorblattteilform.

In den Zeichnungen sind jeweils gleiche oder gleichartige Elemente und/oder Teile mit denselben Bezugsziffern versehen, so dass von einer erneuten Vorstellung jeweils abgesehen wird.

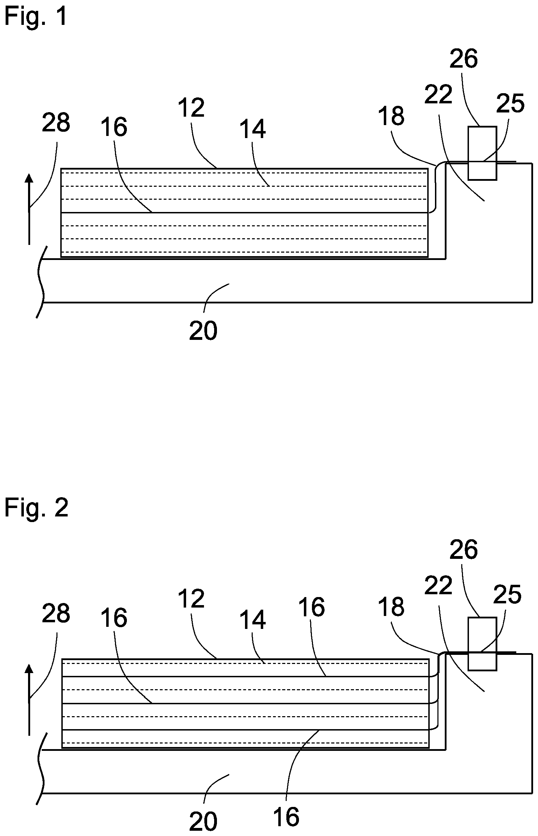

In Fig. 1 ist schematisch ein Faserbauteil 12 dargestellt, welches an der Formwand 22 einer Hauptform 20 fixiert ist. Das vorgefertigte Faserbauteil 12 umfasst eine Reihe von Fasermateriallagen 14, die als gestrichelte Linien dargestellt sind. Aus Gründen der besseren Übersicht sind nur einige der Fasermateriallagen 14 dargestellt. In einem realen Faserbauteil werden hingegen für gewöhnlich eine deutlich größere Anzahl Fasermateriallagen 14 verwendet, die zudem direkt aufeinander aufliegen. Ebenfalls zur besseren Übersicht ist nur eine der Fasermateriallagen 14 mit einem Bezugszeichen versehen.

Zwischen den Fasermateriallagen 14 ist ein Einlageelement 16 in dem Faserbauteil 12 angeordnet. Das Einlageelement 16 umfasst einen Teil, der in Richtung der Formwand 22 über die Fasermateriallagen 14 übersteht. Der überstehende Teil des Einlageelements 16 bildet dabei die Fixierlasche 18. Die Fixierlasche 18 weist ein Fixierelement 24 in Form einer kreisförmigen Aussparung auf, das in der in Fig. 1 gewählten Ansicht nicht sichtbar ist.

An der Formwand 22 ist an der Fixierstelle 25 ein Fixierbolzen 26 fixiert, über den die Fixierlasche 18 mit der Aussparung gehängt wird. Auf diese Weise wird das vorgefertigte Faserbauteil 12 an der Formwand 22 fixiert. Alternativ kann der Fixierbolzen 26 auch eine Schraube sein, wobei in diesem Fall die Formwand 22 an der Fixierstelle 25 ein Gewinde aufweist, in die die Schraube geschraubt wird.

Die Erfindung umfasst aber auch andere Formen der Fixierung. So kann das Ende der Fixierlasche 18 beispielsweise gekrümmt sein und in eine Aussparung an der Fixierstelle 25 greifen.

In Fig. 2 ist schematisch ein weiteres Faserbauteil 12 gezeigt, welches an der Formwand 22 fixiert ist. Dieses Faserbauteil 12 unterscheidet sich von dem in Fig. 1 gezeigten Faserbauteil 12 dahingehend, dass es mehrere Einlageelemente 16 aufweist, die in Stapelrichtung 28 der Fasermateriallagen 14 übereinander angeordnet sind. Bevorzugt sind zwischen den Einlageelementen 16 Fasermateriallagen 14 angeordnet.

Die hervorstehenden Teile der Einlageelemente 16 werden dabei zu einer einzelnen Fixierlasche 18 zusammengefasst, insbesondere zusammengeklebt. Auf diese Weise kann die Haltbarkeit und Zugfestigkeit der Fixierlasche 18 erhöht werden.

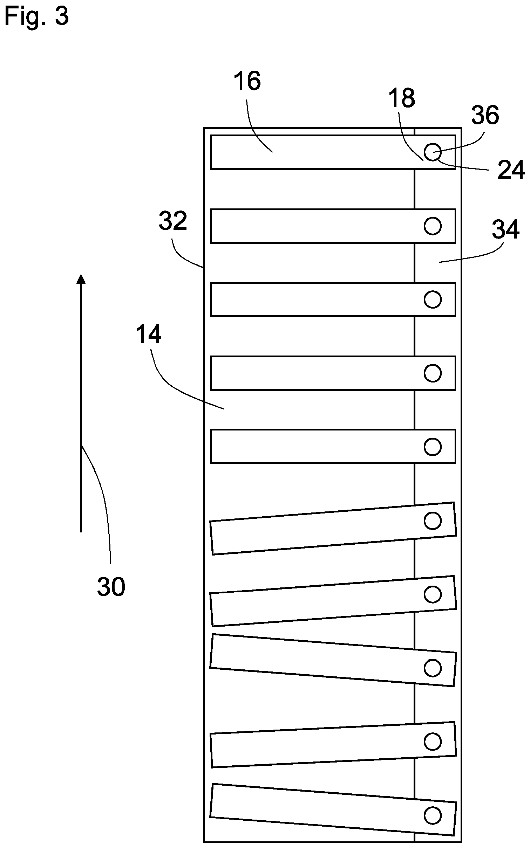

Fig. 3 zeigt schematisch ein Faserbauteil 12 in einer Faserbauteilform 32, wobei in diesem Fall die Stapelrichtung 28 der Fasermateriallagen 14 die Normale der Papierebene bildet.

Bei der Herstellung des Faserbauteils 12 werden Fasermateriallagen 14 in der Faserbauteilform 32 ausgelegt. Anschließend werden mehrere Einlageelemente 16 in Längsrichtung 30 des Faserbauteils 12 nebeneinander angeordnet, wobei die Fixierelemente 24 der Fixierlaschen 18 mittels eines Positionsvorgabeelements 36 genau positioniert werden. Bei den Positionsvorgabeelementen 36 handelt es sich beispielsweise um Bolzen, die an einer vorgegebenen Position auf der Formwand 34 der Faserbauteilform 32 fixiert sind. Dadurch wird die Position der Fixierelemente 24 genau vorgegeben.

Im Gegensatz dazu ist die genaue Position und Ausrichtung eines Einlageelements 16 nicht notwendigerweise vorgegeben, die Einlageelemente 16 können bezüglich der Längsrichtung 30 auch verkippt sein, solange die Position der Fixierelemente 24 dadurch nicht verändert wird. Dies ist in Fig. 3 am Beispiel der unteren fünf Einlageelemente 16 gezeigt.

Nach der Positionierung der Einlageelemente 16 werden weitere Fasermateriallagen 14 auf die Einlageelemente 16 gelegt und anschließend weitere Einlageelemente 16 positioniert, so dass eine Struktur des Faserbauteils entsteht, wie sie in Fig. 2 gezeigt ist.

Schließlich wird das Faserbauteil 12 mit einem Matrixmaterial getränkt.

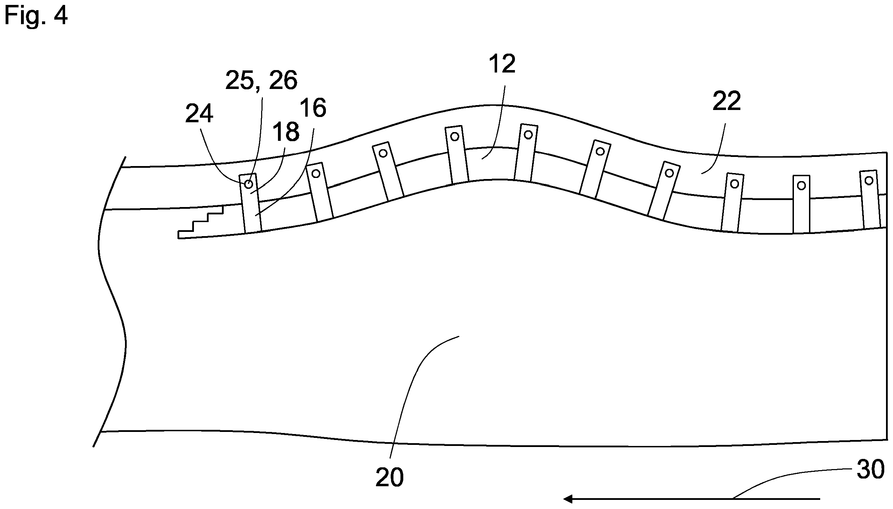

In Fig. 4 ist schematisch die Fixierung eines Faserbauteils 12, bei dem es sich um einen Hinterkantengurt handelt, in einer Hauptform 20 gezeigt. Die Darstellung in Fig. 4 ist so gewählt, dass die Einlageelemente 16 vollständig sichtbar sind, obwohl diese eigentlich mit Ausnahme der Fixierlaschen 18 von darüber liegenden Fasermateriallagen 14 überdeckt würden.

Die Rotorblattteilform 20 wird zur Fertigung einer Halbschale eines Rotorblatts verwendet, wobei die als Pfeil dargestellte Längsrichtung 30 von der Blattwurzel zur Rotorblattspitze zeigt und der Bereich der Rotorblattteilform 20, der zur Fertigung der Rotorblattspitze dient, aus Gründen der Übersichtlichkeit nicht gezeigt ist. In Richtung der zu fertigenden Rotorblatthinterkante umfasst die Rotorblattteilform 20 die Formwand 22, die eine Reihe von Fixierstellen 25 aufweist.

Nachdem der vorgefertigte Hinterkantengurt mittels einer Faserbauteilform 32 angefertigt wurde, wird dieser mittels der Fixierelemente 24 an den Fixierstellen 25 und somit an der Formwand 22 fixiert.

Dies geschieht insbesondere dadurch, dass Fixierbolzen 26 durch die Fixierelemente 24, welche als Aussparungen ausgebildet sind, an den Fixierstellen 25 gesteckt werden. Alternativ sind beispielsweise die Fixierbolzen 26 fest an der Formwand 22 fixiert und der Hinterkantengurt wird mittels den in den Fixierlaschen 16 vorgesehenen Aussparungen über die Fixierbolzen 26 gehängt.

Auf diese Weise wird ein Verrutschen des Hinterkantengurts verhindert und eine genaue Positionierung des Hinterkantengurts, auch nach mehrmaligem Abnehmen und erneutem Fixieren, sichergestellt.

Im Rahmen der Erfindung sind Merkmale, die mit "insbesondere" oder "vorzugsweise" gekennzeichnet sind, als fakultative Merkmale zu verstehen.

### Bezugszeichenliste

- 12: Faserbauteil
- 14: Fasermateriallagen
- 16: Einlageelement
- 18: Fixierlasche
- 20: Rotorblattteilform
- 22: Formwand
- 24: Fixierelement
- 25: Fixierstelle
- 26: Fixierbolzen
- 28: Stapelrichtung
- 30: Längsrichtung
- 32: Faserbauteilform
- 34: Formwand
- 36: Positionsvorgabeelement

## Patentansprüche

1. Verfahren zur Herstellung eines Faserbauteils (12) mittels einer Faserbauteilform (32), wobei das Faserbauteil (12) aus mehreren Fasermateriallagen (14) gefertigt wird, wobei wenigstens ein Einlageelement (16) in Stapelrichtung (28) zwischen den Fasermateriallagen (14) angeordnet wird, wobei das Einlageelement (16) einen über die Fasermateriallagen (14) überstehenden Teil umfasst und der überstehende Teil des Einlageelements (16) eine Fixierlasche (18) bildet, wobei die Faserbauteilform (32) ein Positionsvorgabeelement (34) umfasst, mit der die Fixierlasche (18) in Bezug auf das Faserbauteil (12) ortsfest positioniert wird, wobei zur ortsfesten Positionierung der Fixierlasche (18) ein Fixierelement (24) der Fixierlasche (18) auf dem Positionsvorgabeelement (34) positioniert wird, wobei mehrere Einlageelemente (16) im Faserbauteil (12) angeordnet werden, welche in Längsrichtung (30) des Faserbauteils (12) nebeneinander angeordnet werden, wobei jedes nebeneinander angeordnete Einlageelement (16) eine Fixierlasche (18) umfasst, **dadurch gekennzeichnet, dass** mehrere Einlageelemente (16) im Faserbauteil (12) angeordnet werden, welche in Stapelrichtung (28) der Fasermateriallagen (14) übereinander angeordnet werden, wobei die überstehenden Teile der übereinander angeordneten Einlageelemente (16) zu einer einzelnen Fixierlasche (18) zusammengefügt werden und wobei insbesondere zwischen den Einlageelementen (16) wenigstens eine Fasermateriallage (14) angeordnet wird.

2. Verfahren nach Anspruch 1, **dadurch gekennzeichnet, dass** die überstehenden Teile der übereinander angeordneten Einlageelemente (16) zur einzelnen Fixierlasche (18) miteinander verklebt werden.

3. Verfahren nach Anspruch 1 oder 2, **dadurch gekennzeichnet, dass** für jede Fixierlasche (18) ein Positionsvorgabeelement vorgesehen ist.

4. Verfahren nach einem der Ansprüche 1 bis 3, **dadurch gekennzeichnet, dass** das Faserbauteil (12) ein Hinterkantengurt ist.

5. Verfahren zum Herstellen eines Rotorblatts einer Windenergieanlage, wobei in einer Rotorblattteilform (20) umfassend eine Formwand (22) ein vorgefertigtes Faserbauteil (12) angeordnet wird, wobei das Faserbauteil (12) durch das Verfahren nach einem der Ansprüche 1 bis 4 hergestellt wird, wobei das Einlageelement in Richtung der Formwand den über die Fasermateriallagen überstehenden Teil umfasst und der überstehende Teil des Einlageelements die Fixierlasche bildet, wobei die Formwand an einer vorgegebenen Position wenigstens eine Fixierstelle umfasst und wobei das Faserbauteil mittels eines Fixierelements der Fixierlasche an der Fixierstelle ortsfest fixiert wird.

6. Verfahren nach Anspruch 5, **dadurch gekennzeichnet, dass** das Faserbauteil (12) in dem Rotorblatt endgültig fixiert wird, indem das Faserbauteil (12) und in der Rotorblattform ausgelegte Fasermateriallagen durch Infusion, insbesondere Vakuuminfusion, mit einem Matrixmaterial miteinander verbunden werden, wobei nach der endgültigen Fixierung des Faserbauteils (12) die Fixierlaschen (18) abgetrennt werden.

7. Verfahren nach Anspruch 5 oder 6, **dadurch gekennzeichnet, dass** das Fixierelement (24) eine Aussparung ist, wobei die Fixierlaschen (18) an den Fixierstellen (25) mittels Fixierbolzen (26), die insbesondere durch die Aussparungen gesteckt werden, ortsfest fixiert werden.

8. Faserbauteil (12) für ein Rotorblatt einer Windenergieanlage, wobei das Faserbauteil (12) aus mehreren Fasermateriallagen (14) gefertigt ist, wobei das Faserbauteil (12) wenigstens ein Einlageelement (16) umfasst und das Einlageelement (16) einen über die Fasermateriallagen (14) überstehenden Teil umfasst und der überstehende Teil des Einlageelements (16) eine Fixierlasche (18) mit einem Fixierelement (24) bildet, wobei mehrere Einlageelemente (16) im Faserbauteil (12) angeordnet sind, welche in Längsrichtung (30) des Faserbauteils (12) nebeneinander angeordnet sind, wobei jedes nebeneinander angeordnete Einlageelement (16) eine Fixierlasche (18) umfasst, **dadurch gekennzeichnet, dass** das Faserbauteil (12) mehrere Einlageelemente (16) umfasst, welche in Stapelrichtung (28) der Fasermateriallagen (14) übereinander angeordnet sind, wobei die überstehenden Teile der übereinander angeordneten Einlageelemente (16) zu einer einzelnen Fixierlasche (18) zusammengefügt werden und wobei insbesondere zwischen den Einlageelementen (16) wenigstens eine Fasermateriallage (14) angeordnet ist.

9. Faserbauteil (12) nach Anspruch 8, **dadurch gekennzeichnet, dass** das Fixierelement (24) eine Aussparung ist.

10. Faserbauteil (12) nach Anspruch 8 oder 9, **dadurch gekennzeichnet, dass** die überstehenden Teile der übereinander angeordneten Einlageelemente (16) zur einzelnen Fixierlasche (18) miteinander verklebt werden.

11. Faserbauteil (12) nach einem der Ansprüche 8 bis 10, **dadurch gekennzeichnet, dass** das Faserbauteil (12) mehrere Einlageelemente (16) umfasst, wobei die Einlageelemente (16) in Längsrichtung (30) des Faserbauteils (12) nebeneinander angeordnet sind, wobei jedes nebeneinander angeordnete Einlageelement (16) eine Fixierlasche (18) umfasst.

12. Faserbauteil (12) nach einem der Ansprüche 8 bis 11, **dadurch gekennzeichnet, dass** die Einlageelemente (16) Glasfasergelege sind oder Glasfasergelege umfassen.

13. Faserbauteil (12) nach einem der Ansprüche 8 bis 12, **dadurch gekennzeichnet, dass** das Faserbauteil (12) ein Hinterkantengurt ist.

14. Rotorblatt einer Windenergieanlage, umfassend wenigstens ein Faserbauteil (12) nach einem der Ansprüche 8 bis 13, wobei insbesondere die Fixierlaschen (18) der Einlageelemente (16) des Faserbauteils (12) abgetrennt wurden.

15. Windenergieanlage, umfassend wenigstens ein Rotorblatt nach Anspruch 14.

## Claims

1. A method of manufacturing a fibre component (12) by means of a fibre component mould (32), wherein the fibre component (12) is manufactured from a plurality of fibre material layers (14), wherein at least one insert element (16) is arranged between the fibre material layers (14) in the stacking direction (28), wherein the insert element (16) comprises a part which projects beyond the fibre material layers (14) and the projecting part of the insert element (16) forms a fixing tab (18), wherein the fibre component mould (32) comprises a position predefining element (34), by means of which the fixing tab (18) is positioned with respect to the fibre component (12) in a stationary manner, wherein, in order to position the fixing tab (18) in a stationary manner, a fixing element (24) of the fixing tab (18) is positioned on the position predefining element (34), wherein a plurality of insert elements (16) are arranged in the fibre component (12), which are arranged next to one another in the longitudinal direction (30) of the fibre component (12), wherein each of the insert elements (16) which are arranged next to one another comprises a fixing tab (18), **characterised in that** a plurality of insert elements (16) are arranged in the fibre component (12), which are arranged one on top of the other in the stacking direction (28) of the fibre material layers (14), wherein the projecting parts of the insert elements (16) which are arranged one on top of the other are joined together to form a single fixing tab (18), and, in particular, wherein at least one fibre material layer (14) is arranged between the insert elements (16).

2. The method according to claim 1, **characterised in that** the projecting parts of the insert elements (16) which are arranged one on top of the other are glued together to form the single fixing tab (18).

3. The method according to claim 1 or 2, **characterised in that** a position predefining element is provided for each fixing tab (18).

4. The method according to any one of claims 1 to 3, **characterised in that** the fibre component (12) is a trailing edge spar cap.

5. A method of manufacturing a rotor blade of a wind energy installation, wherein a prefabricated fibre component (12) is arranged in a mould (20) for a rotor blade part, wherein the mould (20) comprises a mould wall (22), wherein the fibre component (12) is manufactured by the method according to any one of claims 1 to 4, wherein the insert element comprises, in the direction of the mould wall, the part projecting beyond the fibre material layers and the projecting part of the insert element forms the fixing tab, wherein the mould wall comprises at least one fixing location at a predetermined position, and wherein the fibre component is fixed at the fixing location in a stationary manner by means of a fixing element of the fixing tab.

6. The method according to claim 5, **characterised in that** the fibre component (12) is fixed in the rotor blade in a final manner by bonding the fibre component (12) and layers of fibre material which are laid out in the rotor blade shape to one another by infusion, in particular by vacuum infusion, with a matrix material, wherein the fixing tabs (18) are cut off after the final fixing of the fibre component (12).

7. The method according to claim 5 or 6, **characterised in that** the fixing element (24) is a recess, wherein the fixing tabs (18) are fixed at the fixing points (25) in a stationary manner by means of fixing bolts (26), in particular by fixing bolts (26) which are inserted through the recesses.

8. A fibre component (12) for a rotor blade of a wind energy installation, wherein the fibre component (12) is manufactured from a plurality of fibre material layers (14), wherein the fibre component (12) comprises at least one insert element (16), and the insert element (16) comprises a part which projects beyond the fibre material layers (14), and the projecting part of the insert element (16) forms a fixing tab (18) with a fixing element (24), wherein a plurality of insert elements (16) are arranged in the fibre component (12), which are arranged next to one another in the longitudinal direction (30) of the fibre component (12), wherein each of the insert elements (16) which are arranged next to one another comprises a fixing tab (18), **characterised in that** the fibre component (12) comprises a plurality of insert elements (16) which are arranged one on top of the other in the stacking direction (28) of the fibre material layers (14), wherein the projecting parts of the insert elements (16) which are arranged one on top of the other are joined together to form a single fixing tab (18), and, in particular, wherein at least one fibre material layer (14) is arranged between the insert elements (16).

9. The fibre component (12) according to claim 8, **characterised in that** the fixing element (24) is a recess.

10. The fibre component (12) according to claim 8 or 9, **characterised in that** the projecting parts of the insert elements (16) which are arranged one on top of the other are glued together to form the single fixing tab (18).

11. The fibre component (12) according to any one of claims 8 to 10, **characterised in that** the fibre component (12) comprises a plurality of insert elements (16), wherein the insert elements (16) are arranged next to one another in the longitudinal direction (30) of the fibre component (12), wherein each of the insert elements (16) which are arranged next to one another comprises a fixing tab (18).

12. The fibre component (12) according to any one of claims 8 to 11, **characterised in that** the insert elements (16) are made of glass fibre scrim material or comprise glass fibre scrim material.

13. The fibre component (12) according to any one of claims 8 to 12, **characterised in that** the fibre component (12) is a trailing edge spar cap.

14. A rotor blade of a wind energy installation, comprising at least one fibre component (12) according to any one of claims 8 to 13, in particular wherein the fixing tabs (18) of the insert elements (16) of the fibre component (12) have been cut off.

15. A wind energy installation, comprising at least one rotor blade according to claim 14.

## Revendications

1. Procédé de fabrication d'un composant fibreux (12) au moyen d'un moule de composant fibreux (32), dans lequel le composant fibreux (12) est fabriqué en plusieurs couches de matériau fibreux (14), dans lequel au moins un élément intercalaire (16) est agencé dans le sens d'empilement (28) entre les couches de matériau fibreux (14), dans lequel l'élément intercalaire (16) comprend une partie dépassant des couches de matériau fibreux (14) et la partie dépassant de l'élément intercalaire (16) forme une languette de fixation (18), dans lequel le moule de composant fibreux (32) comprend un élément de prédéfinition de position (34), avec lequel la languette de fixation (18) est positionnée de manière stationnaire en ce qui concerne le composant fibreux (12), dans lequel pour le positionnement fixe de la languette de fixation (18), un élément de fixation (24) de la languette de fixation (18) est positionné sur l'élément de prédéfinition de position (34), dans lequel plusieurs éléments intercalaires (16) sont agencés dans le composant fibreux (12), lesquels sont agencés les uns à côté des autres dans le sens longitudinal (30) du composant fibreux (12), dans lequel chaque élément intercalaire (16) agencé l'un à côté de l'autre comporte une languette de fixation (18), **caractérisé en ce que** plusieurs éléments intercalaires (16) sont agencés dans le composant fibreux (12), lesquels sont agencés les uns au-dessus des autres dans le sens d'empilement (28) des couches de matériau fibreux (14), dans lequel les parties dépassant des éléments intercalaires (16) agencés les uns au-dessus des autres sont assemblées en une languette de fixation (18) individuelle et dans lequel au moins une couche de matériau fibreux (14) est agencée en particulier entre les éléments intercalaires (16).

2. Procédé selon la revendication 1, **caractérisé en ce que** les parties dépassant des éléments intercalaires (16) agencés les uns au-dessus des autres sont collées les unes aux autres en une languette de fixation (18) individuelle.

3. Procédé selon la revendication 1 ou 2, **caractérisé en ce qu'**un élément de prédéfinition de position est prévu pour chaque languette de fixation (18).

4. Procédé selon l'une des revendications 1 à 3, **caractérisé en ce que** le composant fibreux (12) est une sangle de bord arrière.

5. Procédé de fabrication d'une pale de rotor d'une éolienne, dans lequel un composant fibreux préfabriqué (12) est agencé dans un moule de partie de pale de rotor (20) comprenant une paroi de moule (22), dans lequel le composant fibreux (12) est fabriqué par le procédé selon l'une des revendications 1 à 4, dans lequel l'élément intercalaire comprend en direction de la paroi de moule la partie dépassant des couches de matériau fibreux et la partie dépassant de l'élément intercalaire forme la languette de fixation, dans lequel la paroi de moule comprend dans une position prédéfinie au moins un point de fixation et dans lequel le composant fibreux est fixé de manière stationnaire au moyen d'un élément de fixation de la languette de fixation au point de fixation.

6. Procédé selon la revendication 5, **caractérisé en ce que** le composant fibreux (12) est définitivement fixé dans la pale de rotor, **en ce que** le composant fibreux (12) et des couches de matériau fibreux conçues dans le moule de pale de rotor sont reliés entre eux par infusion, en particulier infusion sous vide, avec un matériau matriciel, dans lequel les languettes de fixation (18) sont séparées après la fixation définitive du composant fibreux (12).

7. Procédé selon la revendication 5 ou 6, **caractérisé en ce que** l'élément de fixation (24) est un évidement, dans lequel les languettes de fixation (18) sont fixées de manière stationnaire aux points de fixation (25) au moyen de boulons de fixation (26) qui sont enfichés en particulier à travers les évidements.

8. Composant fibreux (12) pour une pale de rotor d'une éolienne, dans lequel le composant fibreux (12) est fabriqué en plusieurs couches de matériau fibreux (14), dans lequel le composant fibreux (12) comporte au moins un élément intercalaire (16) et l'élément intercalaire (16) comprend une partie dépassant de couches de matériau fibreux (14) et la partie dépassant de l'élément intercalaire (16) forme une languette de fixation (18) avec un élément de fixation (24), dans lequel plusieurs éléments intercalaires (16) sont agencés dans le composant fibreux (12), lesquels sont agencés les uns à côté des autres dans le sens longitudinal (30) du composant fibreux (12), dans lequel chaque élément intercalaire (16) agencé l'un à côté de l'autre comprend une languette de fixation (18), **caractérisé en ce que** le composant fibreux (12) comprend plusieurs éléments intercalaires (16) qui sont agencés dans le sens d'empilement (28) des couches de matériau fibreux (14) les uns au-dessus des autres, dans lequel les parties dépassant des éléments intercalaires (16) agencés les uns au-dessus des autres sont assemblées en une languette de fixation (18) individuelle et dans lequel au moins une couche de matériau fibreux (14) est agencée en particulier entre les éléments intercalaires (16).

9. Composant fibreux (12) selon la revendication 8, **caractérisé en ce que** l'élément de fixation (24) est un évidement.

10. Composant fibreux (12) selon la revendication 8 ou 9, **caractérisé en ce que** les parties dépassant des éléments intercalaires (16) agencés les uns au-dessus des autres sont collées les unes aux autres en une languette de fixation (18) individuelle.

11. Composant fibreux (12) selon l'une des revendications 8 à 10, **caractérisé en ce que** le composant fibreux (12) comprend plusieurs éléments intercalaires (16), dans lequel les éléments intercalaires (16) sont agencés les uns à côté des autres dans le sens longitudinal (30) du composant fibreux (12), dans lequel chaque élément intercalaire (16) agencé l'un à côté de l'autre comprend une languette de fixation (18).

12. Composant fibreux (12) selon l'une des revendications 8 à 11, **caractérisé en ce que** les éléments intercalaires (16) sont des canevas de fibre de verre ou comprennent des canevas de fibre de verre.

13. Composant fibreux (12) selon l'une des revendications 8 à 12, **caractérisé en ce que** le composant fibreux (12) est une sangle de bord arrière.

14. Pale de rotor d'une éolienne, comprenant au moins un composant fibreux (12) selon l'une des revendications 8 à 13, dans laquelle en particulier les languettes de fixation (18) des éléments intercalaires (16) du composant fibreux (12) ont été séparées.

15. Eolienne comprenant au moins une pale de rotor selon la revendication 14.
